# DEMANDE DE BREVET EUROPEEN

(11) **EP 1 213 809 A1**
(43) Date de publication de la demande: **12.06.2002**
(21) Numéro de dépôt: 01402852.6
(22) Date de dépôt: 05.11.2001
(51) Int. Cl.: H02G 1/12

(54) **Outil à dénuder**

(30) Priorité: 08.12.2000 FR 0016022
(71) Demandeur: FACOM, 91420 Morangis (FR)
(72) Inventeur: Flavigny, Jean-Pierre, 91310 Linas (FR)
(74) Mandataire: Moncheny, Michel

(57) **Abrégé**

Cet outil à dénuder un conducteur électrique revêtu d'une gaine comprend un corps de base (6) ayant une mâchoire de serrage (8) fixe comprenant une partie de serrage fixe, une mâchoire de serrage mobile (12) articulée sur le corps, un ensemble de dénudage (20, 22, 24) et un mécanisme d'actionnement (30) comprenant un levier (32).

Le mécanisme d'actionnement comprend des moyens d'entraînement de l'ensemble de dénudage, et un élément de transmission principal (35) comprenant une partie élastique (36) et solidaire de la mâchoire mobile, -ainsi que des moyens de transmission secondaires à déclenchement (38) qui coopèrent avec le levier et avec l'élément de transmission principal.

Les moyens de transmission secondaires, lors de l'actionnement du levier ferment la mâchoire mobile par l'intermédiaire de la partie élastique, sans déformation de cette dernière, puis, déforment progressivement la partie élastique puis, cèdent en éloignant de la mâchoire mobile (12) de la mâchoire fixe (18).

## Description

La présente invention concerne un outil, notamment pince, à dénuder un conducteur électrique, notamment un fil électrique, revêtu d'une gaine, du type comprenant :
- un corps de base ayant une mâchoire de serrage fixe comprenant une partie de serrage fixe, et comprenant notamment un prolongement formant poignée fixe ;
- une mâchoire de serrage mobile articulée sur le corps de base autour d'un premier axe d'articulation et comprenant une partie de serrage mobile ;
- un ensemble de dénudage ;
- un mécanisme d'actionnement comprenant un levier mobile, notamment formant poignée mobile, articulé sur le corps de base autour d'un second axe d'articulation,
- le mécanisme d'actionnement comprenant en outre des moyens d'entraînement à course libre destinés à entraîner l'ensemble de dénudage dans un mouvement de dénudage.

On connaît dans l'état de la technique des pinces à dénuder. Une telle pince est décrite par exemple dans le document EP-B-0 687 392. La pince comprend un corps de base et une paire de mâchoires de serrage ainsi qu'une paire de mâchoires de dénudage. La pince comprend un mécanisme d'actionnement des mâchoires de serrage et des mâchoires de dénudage. Ce mécanisme comprend un levier articulé sur le corps de base et un actionneur articulé sur le levier. L'actionneur présente une surface formant came qui coopère avec la mâchoire de serrage mobile pendant la course de fonctionnement du levier.

Cette pince est de construction relativement complexe et en conséquence a un coût de fabrication élevé. De plus, pendant le dénudage, cette pince exerce un effort de serrage changeant au fil , dû à la came.

C'est pourquoi l'invention a pour but de proposer un outil à dénuder, et notamment une pince, qui soit plus facile à fabriquer et qui ait un coût faible de fabrication. Un autre but de l'invention est de proposer un outil qui exerce une force de serrage progressive sur le fil, pendant toute l'étape de dénudage.

A cet effet, l'invention a pour objet un outil à dénuder du type précité, caractérisée en ce que le mécanisme d'actionnement comprend en outre :
- un élément de transmission principal comprenant une partie élastique et solidaire de la mâchoire mobile;
- des moyens de transmission secondaires à déclenchement qui coopèrent avec le levier et avec une partie de coopération de l'élément de transmission principal;
- et en ce que ces moyens de transmission secondaires, lors de la course d'actionnement du levier dans le sens de fermeture des mâchoires, pendant une première phase ferment la mâchoire mobile par l'intermédiaire de la partie élastique, sensiblement sans déformation de cette partie élastique jusqu'à ce que les mâchoires de serrage serrent le conducteur, puis, pendant une deuxième phase, agissent progressivement sur la partie élastique en la déformant puis, lorsque la partie élastique atteint une position prédéterminée, lesdits moyens de transmission secondaires cèdent en permettant au moins l'éloignement de la partie de serrage de la mâchoire mobile par rapport à la partie de serrage de la mâchoire fixe.

Selon des modes particuliers de réalisation de l'invention, l'outil peut comporter l'une ou plusieurs des caractéristiques suivantes :
- la partie élastique est une tige flexible solidaire de la partie proximale de la mâchoire mobile et s'étend à l'opposé de la partie de serrage de la mâchoire mobile par rapport audit premier axe, et les moyens de transmission secondaires coopèrent avec la partie d'extrémité proximale de la tige flexible ;
- la partie élastique s'étend dans une zone intermédiaire du corps de base, notamment entre le prolongement et le levier ;
- ledit second axe est situé dans une zone intermédiaire du corps, notamment proche de la partie distale du prolongement ;
- ledit second axe d'articulation est confondu avec ledit premier axe ;
- ledit second axe d'articulation est distant dudit premier axe d'articulation ;
- l'agencement est tel que l'effort transmis par l'élément de transmission principal aux moyens de transmission secondaires à déclenchement dans le sens de la fermeture du levier est nettement supérieur à l'effort transmis par cet élément à ces moyens dans le sens de l'ouverture du levier ;
- les moyens de transmission secondaires cèdent par cassure ;
- les moyens de transmission secondaires à déclenchement comprennent un mécanisme articulé ayant des première et seconde bielles articulées l'une à l'autre, ladite première bielle étant articulée sur ladite partie de coopération de l'élément de transmission principal et ladite seconde bielle étant articulée sur le levier et sur ladite première bielle ;
- lesdites deux bielles comprennent une butée en rotation qui maintient un premier plan défini par les axes de ladite première bielle à un angle défini obtus ouvert vers l'élément de transmission principal par rapport à un second plan défini par les axes de ladite seconde bielle pendant lesdites première et seconde phases, le déclenchement des moyens de transmission secondaires étant constitué par une rotation de ladite première bielle autour de son axe d'articulation à ladite seconde bielle dans le sens de la diminution de l'angle desdits plans ;
- la butée comprend des moyens de réglage dudit angle de brisure desdits deux plans entre eux, notamment une vis de réglage ;
- après ledit déclenchement, ledit angle est sensiblement un angle droit ;
- l'outil comporte un ressort de rappel qui est fixé sur le levier et sur ladite seconde bielle, et qui sollicite ladite seconde bielle de telle sorte que, lorsque l'outil est dans sa position de repos, ladite première bielle est sollicité contre la butée ;
- les moyens d'entraînement à course libre comprennent un organe, notamment un crochet, qui coopère avec un organe associé disposé sur l'ensemble de dénudage et qui est relié au levier, et cet organe et le levier étant fabriqués d'un seul tenant, notamment d'une seule pièce ;
- l'outil comprend un ressort, notamment de traction, de rappel du levier dans sa position de repos, et en ce que ce ressort est relié, d'une part, au levier et d'autre part, à l'ensemble de dénudage ; et
- l'ensemble de dénudage comprend une paire de mâchoires de dénudage coopérantes montée entre les mâchoires de serrage, pour un mouvement de coulissement selon la longueur d'un fil serré entre les deux mâchoires de serrage, le mouvement de fermeture et l'ouverture des mâchoires de serrage fermant et ouvrant les mâchoires de dénudage.

L'invention sera mieux comprise à la lecture de la description qui va suivre, donnée uniquement à titre d'exemple et faite en se référant aux dessins annexés, sur lesquels :
- la Figure 1 est une vue schématique de côté et en coupe partielle d'une pince à dénuder selon l'invention, la pince étant en position de repos ;

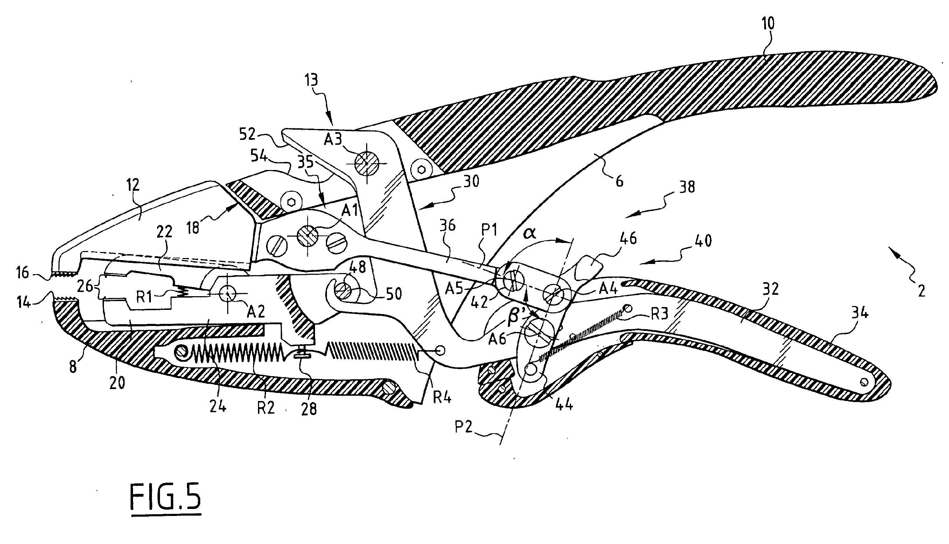

- les Figures 2 à 5 sont des vues de la pince de la Figure 1, pendant les différentes étapes de fonctionnement ;
- la Figure 6 est une vue schématique de côté et en coupe partielle d'une variante de la pince à dénuder ; et
- la Figure 6A est une vue en coupe selon la ligne VIA-VIA de la Figure 6.

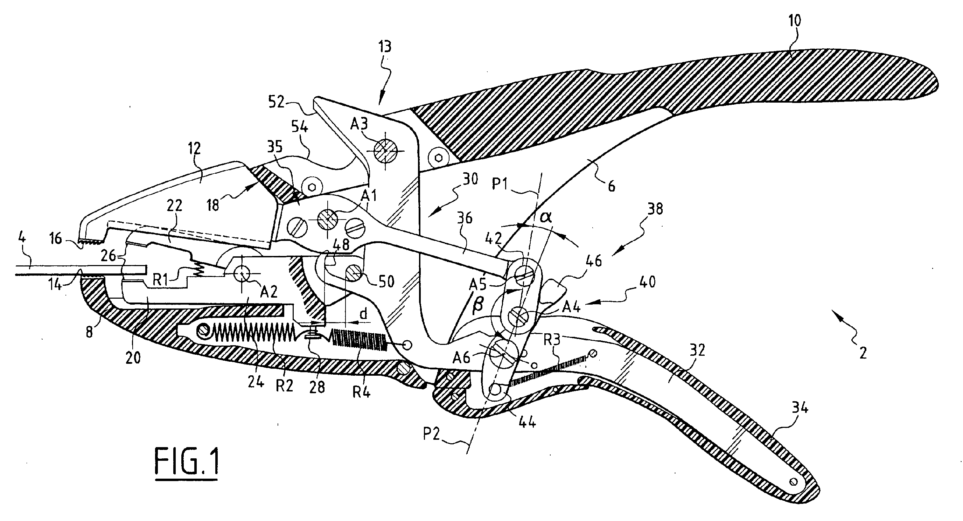

Sur la Figure 1, on a représenté une pince à dénuder selon l'invention, désignée par la référence générale 2.

Dans ce qui suit, l'expression « proximal » désignera le sens tourné vers l'utilisateur tandis que l'expression « distal » désignera le sens opposé. Les expressions « avant » et « arrière », « haut » et « bas », « sens horaire » et « sens anti-horaire » seront utilisées en rapport aux dessins, où l'orientation de la pince est telle que les mâchoires se trouvent à gauche et les poignées à droite.

La pince 2 sert à dénuder l'extrémité d'un fil électrique 4.

Elle comprend un corps de base 6 ayant, sur sa partie distale, une mâchoire de serrage fixe 8 et sur sa partie proximale, à l'opposé de la mâchoire 8, un prolongement formant poignée fixe 10. Une mâchoire de serrage mobile 12 est articulée sur le corps de base 6 autour d'un premier axe A1 disposé dans une zone intermédiaire 13 du corps reliant la mâchoire de serrage fixe 8 et la poignée fixe 10. Les deux mâchoires 8, 12 comportent des parties de serrage 14, 16 à leur extrémité distale. Ces parties 14, 16 sont tournées l'une vers l'autre et ont des dents de serrage formées sur leurs surfaces en regard.

Le corps de base 6 comporte une surface de butée 18 qui limite la course d'ouverture de la mâchoire mobile 12.

Une paire de mâchoires de dénudage 20, 22 est disposée entre les mâchoires de serrage 8, 12. La première mâchoire de dénudage 20 est reliée d'un seul tenant à un élément coulissant 24, tandis que la seconde mâchoire de dénudage 22 est articulée sur cet élément coulissant 24 autour d'un second axe A2.

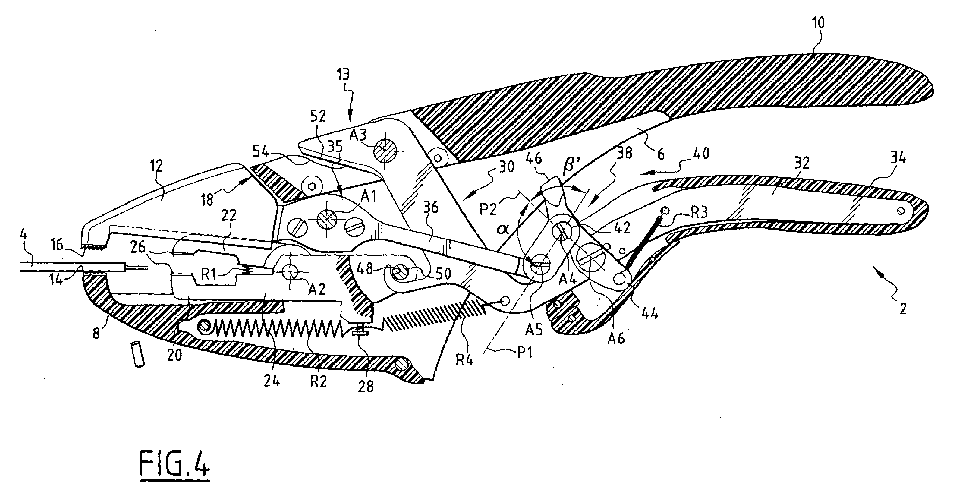

Les deux mâchoires de dénudage 20, 22 sont disposées de façon telle que la fermeture des mâchoires de serrage 8, 12 entraîne celle des mâchoires de dénudage 20, 22. L'élément coulissant 24 peut être déplacé linéairement entre une position distale (Figure 1) et une position proximale (Figure 4).

Un premier ressort R1, en l'occurrence un ressort de compression, est disposé entre les deux mâchoires de dénudage 20, 22 proche de l'axe A2 et tend à écarter l'une de l'autre les deux mâchoires de dénudage.

Les mâchoires de dénudage 20, 22 comportent sur leur extrémité distale des lames 26 pour inciser la gaine du fil électrique 4.

Un second ressort R2 de traction en forme hélicoïdale est fixé sur la mâchoire de serrage fixe 8 et sur une saillie 28 de l'élément coulissant 24, et sollicite cet élément 24 vers l'extrémité distale.

La pince à dénuder 2 comporte en outre un mécanisme d'actionnement 30 des mâchoires. Ce mécanisme 30 comprend un levier 32 articulé sur le corps de base 6 autour d'un troisième axe A3 disposé sensiblement dans la zone intermédiaire 13 du corps 6, au-dessus et légèrement en arrière de l'axe A1. Le levier porte sur sa partie proximale une poignée mobile 34 qui s'étend en vis-à-vis de la poignée fixe 10.

Le mécanisme 30 comprend en outre, un élément de transmission principal 35 comportant une partie élastique, fixé sur la mâchoire de serrage mobile 12. En l'occurrence, la partie élastique est une tige flexible 36 qui s'étend du côté proximal du premier axe d'articulation A1, c'est-à-dire sensiblement dans la zone intermédiaire 13 du corps 6 et entre les parties distales des poignées fixe 10 et mobile 34. La tige flexible 36 peut être fabriquée par exemple en acier de ressort ou en matière plastique. Il est à noter que la tige flexible 36 est conçue suffisamment rigide de telle sorte qu'elle permette un basculement des mâchoires mobiles 12, 22 à l'encontre de l'effort du ressort R1, sensiblement sans flexion de cette tige 36.

L'extrémité proximale de la tige flexible 36 est reliée à des moyens de transmission secondaires 38 à déclenchement portés par le levier 32. Il est à noter que dans ce contexte « à déclenchement» signifie que ces moyens peuvent exercer une force sur l'extrémité de la tige flexible 36 dans le sens dirigé sensiblement vers le haut ou vers la poignée fixe 10 jusqu'à une configuration géométrique relative limite prédéterminée des moyens de transmission et, lors du franchissement de cette configuration limite, les moyens de transmission secondaires cèdent brusquement en libérant la tige 36.

La configuration géométrique prédéterminée est définie de telle sorte qu'elle permette un serrage de l'extrémité du fil 4 entre les deux mâchoires de serrage 8, 12 ainsi qu'un déplacement de l'élément coulissant 24 à l'encontre du ressort de rappel R2 suffisant pour dénuder le fil sans que les moyens de transmission 38 cèdent. Elle est choisie également de sorte qu'à la fin d'un tel déplacement de l'élément coulissant 24, les moyens de transmission secondaires 38 se déclenchent.

Les moyens de transmission 38 comprennent un mécanisme 40 qui est constitué de deux bielles supérieure 42 et inférieure 44 articulées l'une à l'autre autour d'un quatrième axe A4. L'extrémité libre de la première bielle 42 est articulée sur l'extrémité proximale de la tige flexible 36 autour d'un cinquième axe A5, tandis que la seconde bielle 44 est articulée sur le levier 32 autour d'un sixième axe A6. Dans la position de repos de la pince, les axes d'articulation A4, A5 et A4, A6 de chaque bielle 42, 44 définissent deux plans P1 et P2. Les deux plans P1, P2 forment un angle obtus β peu inférieur à 180°, typiquement d'environ 165° à 175°, de sorte que la première bielle 42 s'incline vers la tige flexible 36 d'un petit angle aigu α = 180° - β par rapport au plan P2.

La seconde bielle 44 comporte en outre un prolongement vers le haut 46 formant butée pour la première bielle 42, ce qui empêche que les deux plans P1, P2 forment entre eux un angle inférieur à α.

En outre, un ressort de rappel R3, en l'occurrence un ressort de traction hélicoïdale, est fixé sur l'extrémité libre de la seconde bielle 44 et sur le levier 32, et sollicite l'axe d'articulation A4 tendant à ouvrir l'angle β vers un angle plat.

Un crochet d'entraînement 48 de l'élément coulissant 24 est formé d'un seul tenant avec le levier 32 et s'étend dans une fente ménagée dans l'élément coulissant 24. Dans la position de repos, le crochet 48 se trouve à une distance d d'une tige d'entraînement 50 de l'élément coulissant 24, afin de permettre une course libre ou morte du levier 32 au début du rapprochement des mâchoires 8, 12. Cette course libre est choisie de telle sorte que les mâchoires de serrage 8, 12, soient fermées avant la fin de la course libre.

Un ressort de rappel R4, en l'occurrence un ressort de traction, est tendu entre le levier 32 et la saillie 28 de l'élément coulissant. Ce ressort R4 présente une raideur inférieure à celle du ressort R2.

Le levier 32 comporte en outre sur son extrémité distale, au-delà de l'axe A3, une lame de coupe 52 qui forme un coupant de côté avec une lame complémentaire 54 montée dans la zone intermédiaire 13 du corps 6 et en avant de la poignée fixe 10.

La pince à dénuder 2 selon l'invention fonctionne de la façon suivante.

On part de la position de repos représentée sur la Figure 1, c'est-à-dire les parties de serrage 14, 16, les mâchoires de dénudage 20, 22, et les poignées 10, 34 étant ouvertes, c'est-à-dire éloignées respectivement les unes des autres. Tout d'abord, l'utilisateur introduit l'extrémité du fil électrique 4 à dénuder entre les deux paires des mâchoires 8, 12, 20, 22.

Puis la poignée mobile 34 est rapprochée de la poignée fixe 10, ce qui fait tourner le levier 32 dans le sens de fermeture des mâchoires de sa course d'actionnement, c'est-à-dire dans le sens anti-horaire autour de son axe d'articulation A3, à l'encontre des ressorts R1 et R4.

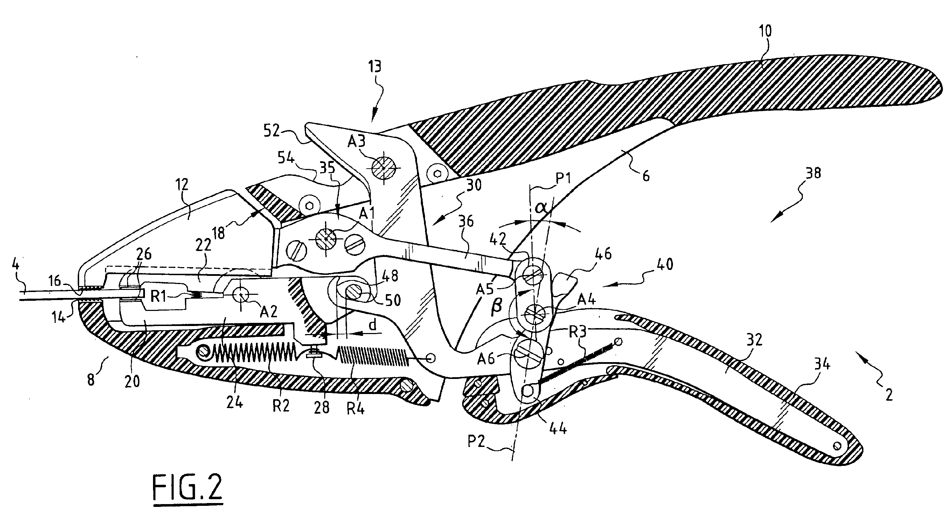

Pendant une première phase de la course de fermeture, la tige flexible 36 est basculée autour de son axe d'articulation A1 par l'intermédiaire des deux bielles 42, 44, jusqu'à ce que les parties de serrage 14, 16 des deux mâchoires de serrage 8, 12 serrent la gaine isolante du fil électrique 4. Les lames 26 des mâchoires de dénudage 20, 22 incisent alors la gaine. Pendant cette première phase, la tige flexible 36 ne fléchit sensiblement pas. Le crochet est également basculé autour de l'axe d'articulation A3, mais l'élément coulissant 24 reste dans sa position distale grâce au jeu d présent entre le crochet 48 et la tige 50 (voir Figure 2).

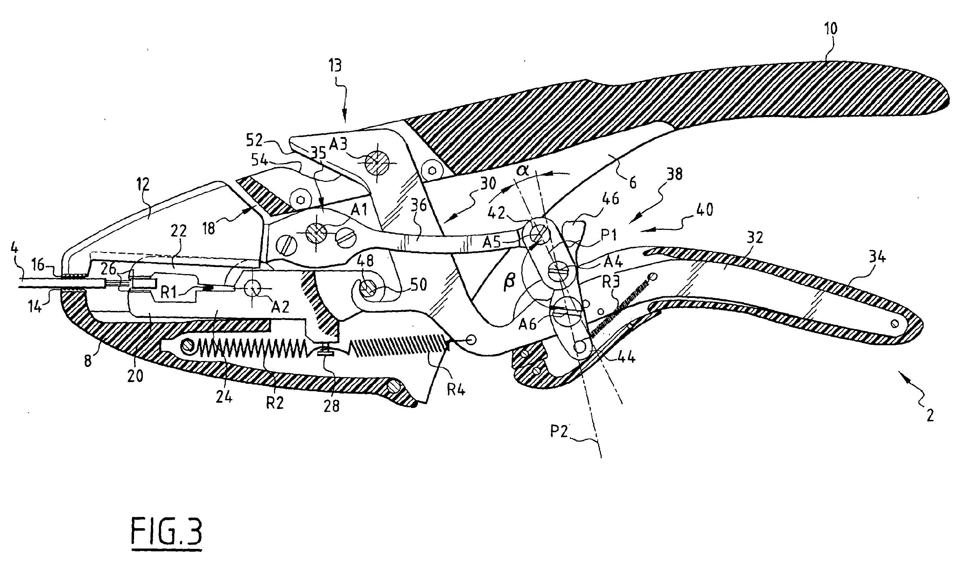

Pendant une deuxième phase, lorsqu'on poursuit le mouvement de rapprochement des deux poignées 10, 32, la mâchoire de serrage mobile 12 est bloquée en rotation par le fil électrique 4 et, en conséquence, les deux bielles 42, 44 font fléchir la tige flexible 36 vers la poignée fixe 10. La force de fléchissement est progressive et est transmise sur la partie de serrage 16 de la mâchoire mobile 12 ce qui permet de maintenir immobile et serré le fil contre la partie de serrage 14 de la mâchoire de serrage fixe 8. A partir de la fin de la course libre d, le crochet 48 entraîne l'élément coulissant 24 et les mâchoires de dénudage 20, 22 vers la droite entraînant le morceau proximal, préalablement incisé de la gaine isolante du fil électrique 4. Les deux poignées 10, 34 sont rapprochées, au cours de cette phase, jusqu'à la position représentée sur la Figure 3.

Sur cette Figure 3, la tige flexible 36 est fléchie au maximum et exerce sur la première bielle 42 un effort maximal qui est dirigé vers le levier 32, en l'occurrence sensiblement vers le bas.

Dès que cette configuration est atteinte, l'orientation des deux bielles 42, 44 et de la partie d'extrémité arrière de la tige 36 est telle que, compte-tenu de l'effort exercé par la tige 36 lorsqu'on poursuit le rapprochement des deux poignées 10, 34, la première bielle 42 bascule brusquement dans le sens anti-horaire autour de l'axe d'articulation A4 des deux bielles, et la tige flexible 36 se détend. La mâchoire de serrage mobile 12 et la tige flexible 36 basculent alors autour de leur axe d'articulation A1 dans le sens horaire jusqu'à ce que la mâchoire mobile 12 vienne au contact de la surface de butée 18 (voir Figure 4). Ce mouvement est dû essentiellement au mouvement d'inertie. Les mâchoires 8, 12, 20, 22 sont alors ouvertes, c'est-à-dire éloignés l'une de l'autre. De plus, les mâchoires de dénudage 20, 22 s'éloignent l'une de l'autre par effet du ressort de rappel R1.

Lorsque l'utilisateur relâche l'effort tendant à rapprocher les deux poignées 10, 34, l'élément coulissant 24 et le levier 32 sont sollicités vers leurs positions initiales par les ressorts R2 et R4.

Pendant la course d'ouverture du levier 32 correspondant à l'éloignement des parties de serrage 14, 16 des mâchoires de serrage 8, 12 et à l'éloignement des poignées 10, 34, l'une de l'autre, la tige flexible 36 est immobilisée en rotation dans le sens horaire au moyen de la butée 18. La première bielle 42 bascule dans le sens horaire autour de son axe d'articulation A5 sur l'extrémité de la tige flexible 36 et la seconde bielle 44 bascule autour de son axe d'articulation A6 dans le sens horaire, et ceci à l'encontre de l'effort du ressort de rappel R3, jusqu'à ce que les deux plans P1, P2 forment un angle droit β' entre eux. A partir de cette position, le ressort R3 bascule la seconde bielle 44 dans le sens anti-horaire autour de l'axe A6 jusqu'à ce que la butée 46 de la seconde bielle 44 s'applique contre la première bielle 42. Les deux bielles se retrouvent alors dans leur position initiale.

Il est à noter que pendant la course d'ouverture du levier 32, les moyens de transmission secondaires 38 exercent sur la tige flexible 36 un effort qui est nettement inférieur à l'effort subi par cette tige pendant la course de fermeture des poignées 10, 34.

A la fin de la course d'ouverture, lorsque l'élément coulissant 24 est arrivé dans sa position distale, le ressort R4 sollicite le levier 32 dans sa position de repos, c'est-à-dire avec le crochet 48 éloigné de la tige d'entraînement 50.

La pince à dénuder se trouve de nouveau dans sa position de repos, c'est-à-dire elle est prête à fonctionner.

En variante, une vis de réglage de l'angle β peut être prévue à travers la butée 46.

En variante encore, les deux axes A1, A3 peuvent être confondus.

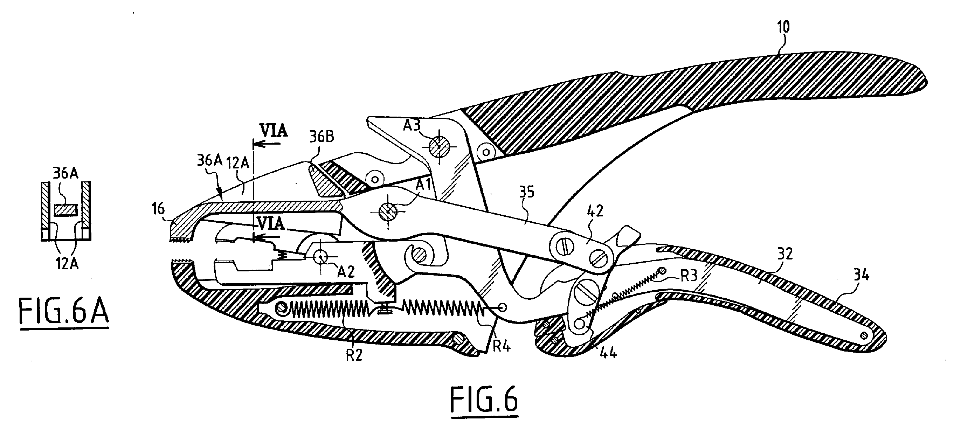

Sur la Figure 6, on a représenté une variante de la pince à dénuder selon l'invention.

Dans ce qui suit uniquement les différences par rapport à la pince décrite ci-dessus seront expliquées.

Cette pince comprend un élément de transmission principal 35 dont la partie élastique 36A est située du même côté de l'axe A1 que la mâchoire mobile 12. La partie 37 de l'élément de transmission principal 35 qui relie l'axe A1 et la première bielle 42 est rigide.

Il est à noter que la mâchoire mobile 12 comprend deux plaques 12A parallèles, solidaires uniquement de la partie de serrage 16 de la mâchoire mobile 12, entre lesquelles est disposée la partie élastique 36A. Les deux plaques 12A sont liées par une entretoise 36B venant en appui sur la butée 18 du corps 6 lors de la réouverture totale de la mâchoire mobile 12. Ces deux plaques servent notamment au guidage de la mâchoire de dénudage supérieure.

La partie élastique 36A est fixée, d'une part, sur la partie distale de la mâchoire mobile 12 et, d'autre part, sur la partie rigide de l'élément 35, proche de l'axe A1 du côté distal.

Le fonctionnement de cette pince est analogue en fonctionnement de la pince décrite ci-dessus.

## Revendications

1. Outil, notamment pince (2), à dénuder un conducteur électrique, notamment un fil électrique, revêtu d'une gaine, du type comprenant :
- un corps de base (6) ayant une mâchoire de serrage (8) fixe comprenant une partie de serrage fixe (14), et comprenant notamment un prolongement formant poignée fixe (10) ;
- une mâchoire de serrage mobile (12) articulée sur le corps de base (6) autour d'un premier axe d'articulation (A1) et comprenant une partie de serrage mobile (16);
- un ensemble de dénudage (20, 22, 24) ;
- un mécanisme d'actionnement (30) comprenant un levier mobile (32), notamment formant poignée mobile (34), articulé sur le corps de base (6) autour d'un second axe d'articulation (A3),
- le mécanisme d'actionnement comprenant en outre des moyens d'entraînement à course libre (48, 50) destinés à entraîner l'ensemble de dénudage (20, 22, 24) dans un mouvement de dénudage ;
**caractérisé en ce que** le mécanisme d'actionnement comprend en outre :
- un élément de transmission principal (35) comprenant une partie élastique (36 ; 36A) et solidaire de la mâchoire mobile (12) ;
- des moyens de transmission secondaires à déclenchement (38) qui coopèrent avec le levier (32) et avec une partie de coopération de l'élément de transmission principal (35) ;
- et **en ce que** ces moyens de transmission secondaires (38), lors de la course d'actionnement du levier (32) dans le sens de fermeture des mâchoires, pendant une première phase ferment la mâchoire mobile (12) par l'intermédiaire de la partie élastique, sensiblement sans déformation de cette partie élastique (36 ; 36A) jusqu'à ce que les mâchoires de serrage (8, 12) serrent le conducteur, puis, pendant une deuxième phase, agissent progressivement sur la partie élastique en la déformant puis, lorsque la partie élastique atteint une position prédéterminée, lesdits moyens de transmission secondaires (38) cèdent en permettant au moins l'éloignement de la partie de serrage (16) de la mâchoire mobile (12) par rapport à la partie de serrage (14) de la mâchoire fixe (18).

2. Outil à dénuder selon la revendication 1, **caractérisé en ce que** la partie élastique est une tige flexible (36) solidaire de la partie proximale de la mâchoire mobile (12) et s'étend à l'opposé de la partie de serrage (16) de la mâchoire mobile par rapport audit premier axe, et **en ce que** les moyens de transmission secondaires (38) coopèrent avec la partie d'extrémité proximale de la tige flexible (36).

3. Outil à dénuder selon la revendication 1 ou 2, **caractérisé en ce que** la partie élastique (36) s'étend dans une zone intermédiaire (13) du corps de base (6), notamment entre le prolongement (10) et le levier (32).

4. Outil à dénuder selon l'une quelconque des revendications précédentes, **caractérisé en ce que** ledit second axe (A3) est situé dans une zone intermédiaire (13) du corps (6), notamment proche de la partie distale du prolongement (10).

5. Outil à dénuder selon l'une quelconque des revendications précédentes, **caractérisé en ce que** ledit second axe d'articulation (A3) est confondu avec ledit premier axe (A1).

6. Outil à dénuder selon l'une quelconque des revendications 1 à 4, **caractérisé en ce que** ledit second axe d'articulation (A3) est distant dudit premier axe d'articulation (A1).

7. Outil à dénuder selon l'une quelconque des revendications précédentes, **caractérisé en ce que** l'agencement est tel que l'effort transmis par l'élément de transmission principal (35) aux moyens de transmission secondaires à déclenchement (38) dans le sens de la fermeture du levier (32) est nettement supérieur à l'effort transmis par cet élément à ces moyens dans le sens de l'ouverture du levier (32).

8. Outil à dénuder selon l'une quelconque des revendications 1 à 7, **caractérisé en ce que** les moyens de transmission secondaires (38) cèdent par cassure.

9. Outil à dénuder selon la revendication 8, **caractérisé en ce que** les moyens de transmission secondaires à déclenchement (38) comprennent un mécanisme articulé ayant des première (42) et seconde (44) bielles articulées l'une à l'autre, ladite première bielle (42) étant articulée sur ladite partie de coopération de l'élément de transmission principal (35) et ladite seconde bielle (44) étant articulée sur le levier (32) et sur ladite première bielle.

10. Outil à dénuder selon la revendication 9, **caractérisé en ce que** lesdites deux bielles (42, 44) comprennent une butée (46) en rotation qui maintient un premier plan (P1) défini par les axes (A4, A5) de ladite première bielle (42) à un angle défini obtus (β) ouvert vers l'élément de transmission principal (35) par rapport à un second plan (P2) défini par les axes (A4, A6) de ladite seconde bielle (44) pendant lesdites première et seconde phases, le déclenchement des moyens de transmission secondaires (38) étant constitué par une rotation de ladite première bielle (42) autour de son axe d'articulation (A4) à ladite seconde bielle dans le sens de la diminution de l'angle (β) desdits plans (P1, P2).

11. Outil à dénuder selon la revendication 10, **caractérisé en ce que** la butée (46) comprend des moyens de réglage dudit angle de brisure (β) desdits deux plans (P1, P2) entre eux, notamment une vis de réglage.

12. Outil à dénuder selon la revendication 10 ou 11, **caractérisé en ce qu'**après ledit déclenchement, ledit angle (β') est sensiblement un angle droit.

13. Outil à dénuder selon l'une quelconque des revendications 9 à 12, **caractérisé en ce qu'**il comporte un ressort de rappel (R3) qui est fixé sur le levier (32) et sur ladite seconde bielle (44), et qui sollicite ladite seconde bielle de telle sorte que, lorsque l'outil est dans sa position de repos, ladite première bielle est sollicité contre la butée (46).

14. Outil à dénuder selon l'une quelconque des revendications précédentes, **caractérisé en ce que** les moyens d'entraînement à course libre comprennent un organe, notamment un crochet (48), qui coopère avec un organe (50) associé disposé sur l'ensemble de dénudage (20, 22, 24) et qui est relié au levier (32), et cet organe (48) et le levier (32) étant fabriqués d'un seul tenant, notamment d'une seule pièce.

15. Outil à dénuder selon l'une quelconque des revendications précédentes, **caractérisé en ce qu'**il comprend un ressort (R4), notamment de traction, de rappel du levier (32) dans sa position de repos, et **en ce que** ce ressort est relié, d'une part, au levier (32) et d'autre part, à l'ensemble de dénudage (20, 22, 24).

16. Outil à dénuder selon l'une quelconque des revendications 1 à 15, **caractérisé en ce que** l'ensemble de dénudage comprend une paire de mâchoires de dénudage (20, 22) coopérantes montée entre les mâchoires de serrage (8, 12), pour un mouvement de coulissement selon la longueur d'un fil (4) serré entre les deux mâchoires de serrage (8, 12), le mouvement de fermeture et l'ouverture des mâchoires de serrage (8, 12) fermant et ouvrant les mâchoires de dénudage (20, 22).
